# EUROPÄISCHE PATENTSCHRIFT

(11) **EP 0 743 126 B1**
(45) Veröffentlichungstag und Bekanntmachung des Hinweises auf die Patenterteilung: **21.08.2002**
(21) Anmeldenummer: 96102629.1
(22) Anmeldetag: 22.02.1996
(51) Int. Cl.: B23K 9/10

(54) **Lichtbogenschweissgerät mit verbesserter Dynamik**
Arc welding device with improved dynamic characteristics
Appareil de soudage à l'arc avec une caractéristique dynamique améliorée

(30) Priorität: 16.05.1995 DE 19517875
(43) Veröffentlichungstag der Anmeldung: 20.11.1996
(73) Patentinhaber: Szczesny, Michael, 56271 Mündersbach/Westerwald (DE)
(72) Erfinder: Szczesny, Michael, 56271 Mündersbach/Westerwald (DE)
(74) Vertreter: Cohausz & Florack

(56) Entgegenhaltungen:
- EP-A- 0 127 777
- DE-C- 3 803 447
- DE-C- 4 302 443
- US-A- 4 954 691
- US-A- 5 410 467
- MECKE H ET AL: "SCHNELLE ELEKTRONISCHE SPEISEQUELLEN FUER SCHWEISSLICHTBOEGEN" ELEKTRIE, Bd. 48, Nr. 4, 1.Januar 1994, Seiten 143-150, XP000456369

## Beschreibung

Die Erfindung betrifft ein Lichtbogenschweißgerät mit einem wechselstromgespeisten Gleichrichter, der einen Zwischenkreis versorgt, einem primärseitig wechselweise getakteten Stromwandler, der sekundärseitig mindestens einen Strompfad zur Versorgung der Schweißelektrode speist, wobei in Reihe zur Schweißelektrode eine Gleichrichterdiode und eine Drossel und parallel zur Schweißelektrode eine Freilaufdiode vorgesehen sind.

Ein Lichtbogenschweißgerät dieser Art ist aus der Deutschen Patentschrift 38 03 447 bekannt. Bei diesem bekannten Lichtbogenschweißgerät wird durch den wechselstromgespeisten Gleichrichter, den Zwischenkreis und den primärseitig wechselweise getakteten Stromwandler eine sogenannte Inverterstromquelle gebildet, mittels der der Schweißprozeß mit Leistung versorgt wird. Hierbei sind sekundärseiting zwei Stromkreise vorgesehen, die über einen Umschalter so geschaltet sind, daß in der einen Stellung des Schalters beide Stromkreise gemeinsam mit der Schweißelektrode zur Gleichstromspeisung des Schweißprozesses geschaltet sind und daß in der anderen Stellung des Umschalters die Ströme den Schweißprozeß gegensinnig durchfließen, so daß ein Wechselstrombetrieb erfolgt.

Der in diesem Fall in den Schweißprozeß eingespeiste Strom hat idealerweise ein rechteckförmiges Profil, wobei in den Stromlücken die Entladung der Drossel im Schweißstromkreis über die Freilaufdiode erfolgt.

Allerdings ist dem Rechteckverhalten dahingehend eine Grenze gesetzt, daß die ansteigende bzw. abfallende Flanke des Schweißstromes jeweils nicht unendlich steil sein kann. Bei der ansteigenden Flanke ist für das Zeitverhalten einerseits die Leerlaufspannung der Inverterstromquelle und andererseits die im Lastkreis (Schweißstromkreis) befindliche Induktivität (Drossel und Zuleitungsinduktivität) maßgeblich. Durch Wahl der Leerlaufspannung kann somit die Stromanstiegsgeschwindigkeit auf das geforderte Maß erhöht werden. Umgekehrt ist bei der abfallenden Stromflanke die an den Klemmen zum Schweißprozeß anliegende Spannung für das Zeitverhalten maßgeblich. Da diese Spannung im allgemeinen jedoch wesentlich kleiner ist als die maximale Leerlaufspannung, die die Inverterstromquelle zur Verfügung stellt, ist die zu erreichende Stromabfallgeschwindigkeit wesentlich kleiner als die maximale Stromanstiegsgeschwindigkeit in der ansteigenden Flanke. Hierdurch ist die Dynamik des bekannten Lichtbogenschweißgerätes begrenzt.

Der Erfindung liegt die Aufgabe zugrunde, ein Lichtbogenschweißgerät der eingangs genannten Art dahingehend weiterzuentwicklen, daß es hinsichtlich seiner Dynamik für den Stromabfall verbessert wird.

Diese Aufgabe wird erfindungsgemäß dadurch gelöst, daß innerhalb des mindestens einen sekundärseitigen Strompfades über Steuermittel während der abfallenden Schweißstromflanke eine Gegenspannungsquelle in Reihe zuschaltbar ist, deren Polarität so gerichtet ist, daß sich ihr Spannungswert während der abfallenden Flanke zur Schweißprozeßspannung hinzuaddiert.

Die Erfindung zeichnet sich dadurch aus, daß während der abfallenden Stromflanke die Gegenspannung über geeignete Schaltmittel der Schweißprozeßspannung als eine zusätzliche Spannung in Reihe geschaltet überlagert wird, so daß die für die Stromabfallgeschwindigkeit wirkende Zeitkonstante verkürzt wird. Durch die Wahl einer entsprechend hohen Gegenspannung kann somit auch die abfallende Stromflanke entsprechend kurz sein. Hierdurch läßt sich die Dynamik erheblich verbessern. Aufgrund der Steuermittel ist sichergestellt, daß sich die Gegenspannung nur in der absteigenden Stromflanke auswirkt, während die Gegenspannung der übrigen Zeiten überbrückt und damit unwirksam ist.

Die Steuerung der Gegenspannungsquelle kann dabei einerseits in Abhängigkeit von einem vorgegebenen Strom-Sollwertprofil erfolgen, welches von außen, beispielsweise über einen Impulsgenerator, in die Steuerlogik für die Gegenspannungsquelle eingeprägt wird.

Alternativ dazu kann die Steuereinheit für die Gegenspannungsquelle auch Teil eines Regelkreises sein, welcher seinen Istwert aus dem Prozeßstrom erhält und dem als Sollwert das gewünschte Stromprofil vorgegeben wird. Beiden Varianten ist gemeinsam, daß die Gegenspannungsquelle nur im Bereich der abfallenden Stromflanke wirksam ist.

Schaltungstechnisch läßt sich die Gegenspannungsquelle durch unterschiedliche Bauelemente realisieren, wie dies in den Unteransprüchen 5 bis 8 aufgeführt ist. Wenn die Gegenspannung durch eine Leistungszenerdiode in Verbindung mit einem einzigen Schalter realisiert ist, ergibt sich eine passive Gegenspannung.

Wenn die Gegenspannung durch eine Reihenschaltung von Leistungsdioden realisiert wird, ergibt sich eine wesentlich höhere Leistungsfestigkeit, da jede der in Reihe geschalteten Dioden auf einem separaten Kühlkörper aufgebracht sein kann.

Die Anordnung der Gegenspannungsquelle kann innerhalb des Rückstromkreises der Inverterstromquelle frei gewählt sein. Eine bevorzugte Anordnung liegt dann vor, wenn die Gegenspannungsquelle mit ihrer Beschaltung in Reihe mit der Freilaufdiode angeordnet ist.

Alternativ kann zu der oben dargestellten Ausführungsform mit der Inverterstromquelle auch eine sekundär getaktete Stromquelle vorgesehen sein.

Die Erfindung wird im folgenden anhand einer Zeichnung näher erläutert. Dabei zeigen:
- Fig. 1: ein Blockschaltbild eines Ausführungsbeispiels für ein erfindungsgemäßes Lichtbogenschweißgerät,
- Fig. 2: zeitliche Strom- bzw. Spannungsverläufe zur Erläuterung der Funktionsweise des erfindungsgemäßen Lichtbogenschweißgerätes,
wobei
- Fig. 2a: den zeitlichen Verlauf des Schweißstromes bei einem aus dem Stand der Technik bekannten Lichtbogenschweißgerät,
- Fig. 2b: den zeitlichen Verlauf des Schweißstromes gemäß der Erfindung und
- Fig. 2c: den zeitlichen Verlauf der Gegenspannung
darstellen und
- Fig. 3 bis 7: alternative Gestaltungen zur bauelementmäßigen Realisierung der Gegenspannungsquelle gemäß dem ersten Ausführungsbeispiel der Erfindung.

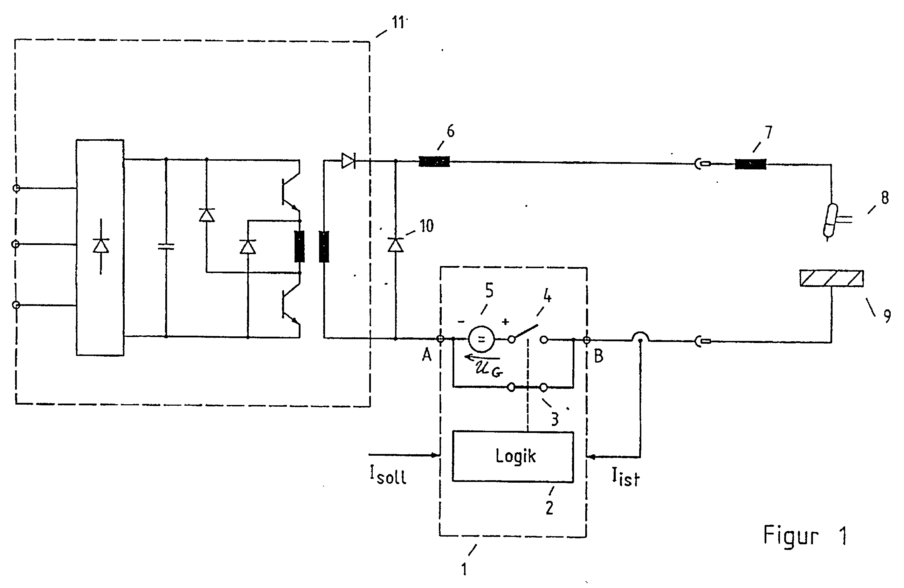

Das in Fig. 1 dargestellte Blockschaltbild für ein Lichtbogenschweißgerät gemäß dem Ausführungsbeispiel der Erfindung zeigt zunächst eine allgemein mit dem Bezugszeichen 11 bezeichnete Inverterstromquelle, die aus einem wechselstromgespeisten Gleichrichter, einem Zwischenkreis sowie einem primärseitig wechselseitig getakteten Stromwandler besteht, welcher sekundärseitig einen Strompfad aufweist, welcher zur Speisung des Schweißprozesses dient. Gegenüber der auf einem Bezugspotential liegenden Gegenelektrode 9 ist mit 8 die Schweißelektrode bezeichnet. Im sekundärseitigen Strompfad der Inverterstromquelle 11 ist eine Gleichrichterdiode vorgesehen.

Im Schweißstromkreis liegt zunächst eine Drossel 6 sowie die die Leitungsinduktivität der Zuleitung zum Schweißprozeß darstellende weitere Induktivität 7.

Zur Entladung der aus den Induktivitäten 6 und 7 gebildeten Gesamtinduktivität während des Rückstromes dient eine Freilaufdiode 10.

In Reihe zum Schweißprozeß 8,9 ist eine Gleichspannungsquelle 5 vorgesehen, deren Polarität, gekennzeichnet durch die Zeichen +,- so gewählt ist, daß sie während der abfallenden Flanke des Schweißstromes gleichsinnig gerichtet ist zu der am Schweißprozeß 8,9 anliegenden Spannung.

Über das Schalterpaar 3,4 kann die Gegenspannungsquelle 5 zugeschaltet bzw. überbrückt werden, wobei bei der Überbrückung der Schalter 3 geschlossen und der Schalter 4 geöffnet und bei Wirksamkeit der Gegenspannungsquelle 5 der Schalter 3 geöffnet bwz. der Schalter 4 geschlossen ist.

Das Öffnen bzw. Schließen der Schalter 3,4 wird durch eine Steuerlogik 2 bestimmt, welche an ihrem Regeleingang sowohl den im Schweißprozeß gemessenen Ist-Strom Iᵢₛₜ als auch einen Vorgabe-Sollwert Iₛₒₗₗ erhält.

Die Steuerlogik 2 schaltet die Schalter 3,4 erfindungsgemäß so, daß innerhalb der abfallenden Stromflanke der Schalter 3 geöffnet und der Schalter 4 geschlossen und daß außerhalb dieses Bereichs die Stellung der Schalter 3,4 umgekehrt ist.

Dies geht aus den zeitlichen Verläufen des Schweißstromes (Fig. 2b) und der von der Gegenspannung produzierten Gleichspannung (Fig. 2c) hervor. Nur im Bereich der abfallenden Stromflanke in Fig. 2b hat die Gegenspannung einen von Null verschiedenen Wert, während außerhalb dieses Zeitbereichs durch Überbrückung der Spannung der Spannungswert Null eingeprägt ist.

Die Erfindung arbeitet wie folgt:

Die vom Inverter 11 gelieferte Spannung abzüglich der Prozeßspannung 8,9 liegt an der Reihenschaltung der Induktivität 6, die die Glättungsinduktivität der Stromquelle darstellt, und der weiteren Induktivität 7, die die Zuleitungsinduktivität für Schlauchpaket und Schweißprozeß darstellt, an und bewirkt einen positiven Stromanstieg im Lastkreis nach der Gleichung di/dt=U/L. Somit ist der Stromanstieg proportional zur Prozeßspannung U. Wird der Inverter 11 ausgeschaltet, werden die Induktivitäten 6 und 7 durch die Schweißprozeßspannung 8,9 und die Freilaufdiode 10 abmagnetisiert. Die dabei zu erreichende maximale Stromabfallfgeschwindigkeit hängt ab von der im Lastkreis auftretenden Spannung, die zunächst im wesentlichen durch die Prozeßspannung 8,9 bedingt ist. Erfindungsgemäß ist aber parallel zu dieser Prozeßspannung 8,9 vorzeichenrichtig eine Gegenspannung in Reihe geschaltet, so daß hierdurch die für die Stromabfallgeschwindigkeit maßgebliche Gleichspannung entsprechend erhöht wird. Proportional zur Höhe der Gegenspannung läßt sich somit die Stromabfallgeschwindigkeit ebenfalls erhöhen.

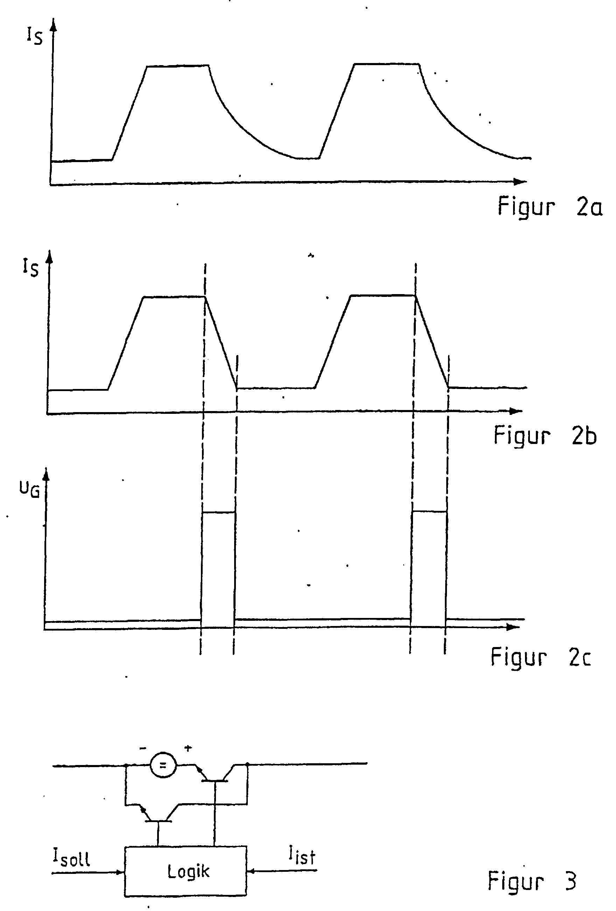

Hierdurch wird im Unterschied zu dem aus dem Stand der Technik bekannten zeitlichen Stromverlauf, der in Fig. 2a dargestellt ist, eine wesentlich kürzere Stromabfallzeit erreicht, was zu einer entsprechenden Erhöhung der Dynamik des Lichtbogenschweißgerätes führt.

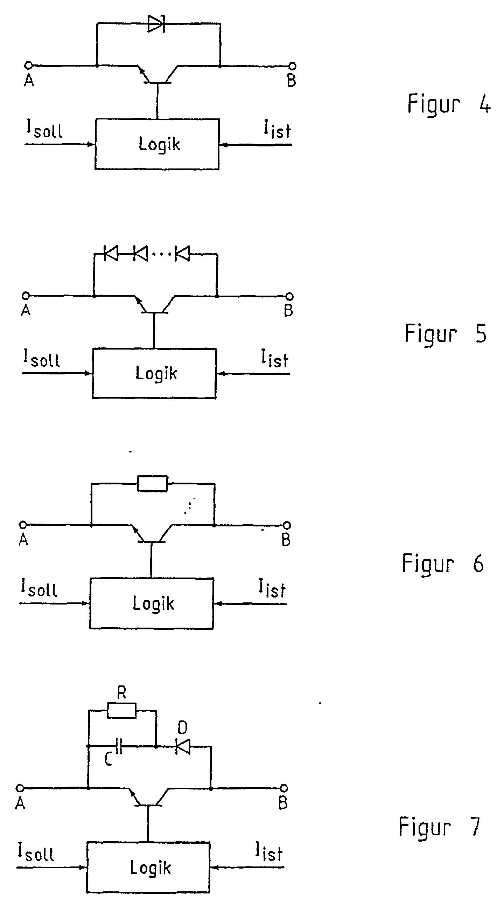

Die Figuren 3 bis 7 zeigen unterschiedliche Realisierungen für die zur Bildung der Gegenspannungsquelle maßgeblichen Bauelemente-Konfigurationen. Zum einen kann gemäß Fig. 3 das aus Fig. 1 bekannte Schalterpaar 3,4 durch Halbleiterschalter ersetzt sein.

Alternativ dazu kann gemäß Fig. 4 die Gegenspannung durch eine Zenerdiode gebildet werden, wobei nur noch ein Schalter erforderlich ist.

Eine höhere Leistungsfestigkeit ergibt sich, wenn eine Vielzahl von in Reihe zueinander geschalteten einzelnen Leistungsdioden angeordnet sind, wie dies aus Fig. 5 hervorgeht. Dabei kann jede der Leistungsdioden auf einem separaten Kühlblech angeordnet sein.

Eine einfache Realisierung zeigt Fig. 6, bei der die Gegenspannungsquelle durch einen Ohmschen Widerstand gebildet ist.

Gemäß Fig. 7 wird ein Netzwerk aus einem Widerstand, einem Kondensator und einer Diode vorgeschlagen, um die Gegenspannung zu bilden. Dabei dient die Diode D als Stromventil zur Aufladung des Kondensators C. Im Gegentakt entlädt sich der Kondensator C über den Widerstand R und bildet somit eine Spannungsquelle entsprechender Größe.

Für die in den Figuren 3 bis 7 dargestellten Schalter werden vorzugsweise Halbleiterschalter verwendet, wie diese Stand der Technik sind, beispielsweise Bipolartransistoren, Feldeffekttransistoren oder IGBT's.

## Patentansprüche

1. Lichtbogenschweißgerät mit einem wechselstromgespeisten Gleichrichter, der einen Zwischenkreis versorgt, einem wechselweise getakteten Stromwandler, der sekundärseitig mindestens einen Strompfad zur Versorgung der Schweißelektrode (8) speist, wobei in Reihe zur Schweißelektrode eine Gleichrichterdiode und eine Drossel (6) und parallel zur Schweißelektrode eine Freilaufdiode (10) vorgesehen sind, **dadurch gekennzeichnet, daß** innerhalb des mindestens einen sekundärseitigen Strompfades über Steuermittel (2,3,4) während der abfallenden Schweißstromflanke eine Gegenspannungsquelle (5) in Reihe zuschaltbar ist, deren Polarität so gerichtet ist, daß sich ihr Spannungswert während der abfallenden Flanke zur Schweißprozeßspannung hinzuaddiert.

2. Lichtbogenschweißgerät nach Anspruch 1,
**dadurch gekennzeichnet, daß** die Gegenspannungsquelle (5) über eine von einem vorgegebenen Stromsollwertprofil gesteuerte Steuerlogik derart zugeschaltet wird, daß während der abfallenden Stromflanken die Gegenspannung wirksam und außerhalb der abfallenden Stromflanken überbrückt ist.

3. Lichtbogenschweißgerät nach Anspruch 1,
**dadurch gekennzeichnet, daß** die Gegenspannungsquelle (5) über Schalter (4,3) gesteuert zuschaltbar ist, wobei die Schalter (3,4) von einer einen Vergleicher enthaltenden Steuerlogik (2) gesteuert sind derart, daß unter der Bedingung, daß der im sekundärseitigen Strompfad gemessene Schweißstrom (Iᵢₛₜ) kleiner ist als ein vorgegebener Sollwert (Iₛₒₗₗ) die Gegenspannungsquelle (5) überbrückt, und daß unter der Bedingung, daß der im sekundärseitigen Strompfad gemessene Schweißstrom (Iᵢₛₜ) größer ist als ein vorgegebener Sollwert (Iₛₒₗₗ) die Gegenspannungsquelle (5) wirksam ist.

4. Lichtbogenschweißgerät nach Anspruch 2,
**dadurch gekennzeichnet, daß** das Stromsollwertprofil über einen Impulsgenerator vorgegeben wird.

5. Lichtbogenschweißgerät nach einem der vorhergehenden Ansprüche,
**dadurch gekennzeichnet, daß** die Gegenspannungsquelle durch eine Leistungszenerdiode gebildet ist.

6. Lichtbogenschweißgerät nach einem der vorhergehenden Ansprüche,
**dadurch gekennzeichnet, daß** die Gegenspannung durch eine Reihenschaltung von Leistungsdioden gebildet ist.

7. Lichtbogenschweißgerät nach einem der vorhergehenden Ansprüche,
**dadurch gekennzeichnet, daß** die Gegenspannung (5) durch einen Widerstand (R) realisiert ist.

8. Lichtbogenschweißgerät nach einem der vorhergehenden Ansprüche,
**dadurch gekennzeichnet, daß** die Gegenspannung durch ein Widerstands/Kondensator/Diodennetzwerk gebildet ist, wobei der Widerstand als Entlade-Widerstand, die Diode als Ventil und der Kondensator als Konstant-Spannungsquelle wirkt.

9. Lichtbogenschweißgerät nach einem der vorhergehenden Ansprüche,
**dadurch gekennzeichnet, daß** die Schalter Halbleiterschalter, insbesondere Bipolartransistoren, Feldeffekttransistoren oder IGBT's sind.

10. Lichtbogenschweißgerät nach einem der vorhergehenden Ansprüche,
**dadurch gekennzeichnet, daß** die Gegenspannungsquelle in Reihe zur Freilaufdiode (10) angeordnet ist.

11. Lichtbogenschweißgerät nach einem der Ansprüche 1 bis 10, **dadurch gekennzeichnet, daß** der Stromwandler primärseitig oder sekundärseitig getaktet ist.

## Claims

1. An arc welding device having an AC-powered rectifier, which supplies an intermediate circuit, and an alternately clocked current converter, which powers at least one current path to supply the welding electrode (8) on the secondary circuit, a rectifier diode and a choke (6) being provided in series to the welding electrode and a freewheeling diode (10) being provided in parallel to the welding electrode,
**characterized in that**
a counter voltage source (5), whose polarity is directed so that it adds its voltage value to the welding process voltage during the falling edge, may be connected in series inside the at least one secondary current path during the falling welding current edge via control means (2, 3, 4).

2. The arc welding device according to Claim 1,
**characterized in that**
the counter voltage source (5) is connected via a control logic, which is controlled by a selected current setpoint profile, in such a way that the counter voltage is active during the falling current edges and is bypassed outside the falling current edges.

3. The arc welding device according to Claim 1,
**characterized in that**
the counter voltage source (5) is controllably connectable via switches (4, 3), the switches (3, 4) being controlled by a control logic (2) containing a comparator in such a way that, under the condition that the welding current (Iᵢₛₜ) measured in the secondary current path is smaller than a selected setpoint (Iₛₒₗₗ), the counter voltage source (5) is bypassed, and, under the condition that the welding current (Iᵢₛₜ) measured in the secondary current path is greater than a selected setpoint (Iₛₒₗₗ), the counter voltage source (5) is active.

4. The arc welding device according to Claim 2,
**characterized in that**
the current setpoint profile is selected via a pulse generator.

5. The arc welding device according to one of the preceding claims,
**characterized in that**
the counter voltage source is formed by a power Zener diode.

6. The arc welding device according to one of the preceding claims,
**characterized in that**
the counter voltage is formed by a series circuit of power diodes.

7. The arc welding device according to one of the preceding claims,
**characterized in that**
the counter voltage (5) is implemented by a resistor (R).

8. The arc welding device according to one of the preceding claims,
**characterized in that**
the counter voltage is formed by a resistor/capacitor/diode network, the resistor acting as a discharge resistor, the diode acting as a valve, and the capacitor acting as a constant voltage source.

9. The arc welding device according to one of the preceding claims,
**characterized in that**
the switches are semiconductor switches, particularly bipolar transistors, field effect transistors, or IGBTs.

10. The arc welding device according to one of the preceding claims,
**characterized in that**
the counter voltage source is arranged in series to the freewheeling electrode (10).

11. The arc welding device according to one of Claims 1 to 10,
**characterized in that**
the current converter is clocked on the primary circuit or on the secondary circuit.

## Revendications

1. Appareil de soudage à l'arc comportant un redresseur alimenté en courant alternatif, qui alimente un circuit intermédiaire, et comportant un transformateur d'intensité commandé de façon cadencée de façon alternative, qui alimente, sur le côté secondaire, au moins une voie de courant pour l'alimentation de l'électrode de soudage (8), et dans lequel une diode redresseuse et une bobine d'arrêt (6) sont prévues en série avec l'électrode de soudage et une diode à effet unidirectionnel (10) est prévue en parallèle avec l'électrode de soudage, **caractérisé en ce qu'**à l'intérieur de la au moins une voie de courant présente sur le côté secondaire peut être raccordée en série, et ce par l'intermédiaire de moyens de commande (2,3,4), pendant le flanc retombant du courant de soudage, une source de tension antagoniste (5), dont la polarité est dirigée de telle sorte que sa valeur de tension est additionnée à la tension de traitement de soudage, pendant le flanc retombant.

2. Appareil de soudage à l'arc selon la revendication 1, **caractérisé en ce que** la source de tension antagoniste (5) est connectée par l'intermédiaire d'une logique de commande commandée par un profil prescrit de valeur de consigne du courant de telle sorte que la tension antagoniste est active pendant les flancs retombants du courant, et est shuntée en dehors des flancs de courant retombants.

3. Appareil de soudage à l'arc selon la revendication 1, **caractérisé en ce que** la source de tension antagoniste peut être connectée d'une manière commandée par l'intermédiaire d'interrupteurs (4,3), les interrupteurs (3,4) étant commandés par une logique de commande (2) contenant un comparateur, de telle sorte que dans la condition où le courant de soudage (I_{réel}) mesuré dans la voie de courant côté secondaire est inférieur à une valeur de consigne prédéterminée (I_{consigne}), la source de tension antagoniste (5) est shuntée et que, dans le cas où le courant de soudage (I_{réel}) mesuré dans la voie de courant côté secondaire est supérieur à une valeur de consigne prédéterminée (I_{consigne}), la source de tension antagoniste (5) est active.

4. Appareil de soudage à l'arc selon la revendication 2, **caractérisé en ce que** le profil de la valeur de consigne du courant est prédéterminé par l'intermédiaire d'un générateur d'impulsions.

5. Appareil de soudage à l'arc selon l'une des revendications précédentes, **caractérisé en ce que** la source de tension antagoniste est formée par une diode Zener de puissance.

6. Appareil de soudage à l'arc selon l'une des revendications précédentes, **caractérisé en ce que** la tension antagoniste est formée par un circuit série formé de diodes de puissance.

7. Appareil de soudage à l'arc selon l'une des revendications précédentes, **caractérisé en ce que** la tension antagoniste (5) est fournie par une résistance (R).

8. Appareil de soudage à l'arc selon l'une des revendications précédentes, **caractérisé en ce que** la tension antagoniste est formée par un réseau à résistance/condensateur/diode, la résistance agissant en tant que résistance de décharge, la diode en tant que valve et le condensateur en tant que source de tension constante.

9. Appareil de soudage à l'arc selon l'une des revendications précédentes, **caractérisé en ce que** les interrupteurs sont des interrupteurs à semiconducteurs, notamment des transistors bipolaires, des transistors à effet de champ ou des transistors IGBT.

10. Appareil de soudage à l'arc selon l'une des revendications précédentes, **caractérisé en ce que** la source de tension antagoniste est branchée en série avec la diode (10) à effet unidirectionnel.

11. Appareil de soudage à l'arc selon l'une des revendications 1 à 10, **caractérisé en ce que** le transformateur d'intensité est commandé de façon cadencée sur le côté primaire ou sur le côté secondaire.
